# EUROPEAN PATENT SPECIFICATION

(11) **EP 1 540 222 B1**
(45) Date of publication and mention of the grant of the patent: **25.04.2007**
(21) Application number: 03787918.6
(22) Date of filing: 19.08.2003
(51) Int. Cl.: F16L 9/12, B29C 47/06

(54) **PLASTICS PIPE**
KUNSTSTOFFROHR
TUYAU EN PLASTIQUE

(30) Priority: 19.08.2002 GB 0219273
(43) Date of publication of application: 15.06.2005
(73) Proprietor: Uponor Innovation AB, 513 81 Fristad (SE)
(72) Inventor: BOWMAN, Jeremy, Chesterfield S40 3NA (GB)
(74) Representative: Hall, Robert Leonard
(86) International application number: PCT/GB2003/003617
(87) International publication number: WO 2004/016976

(56) References cited:
- WO-A-93/00212
- GB-A- 2 297 137
- GB-A- 2 297 138

## Description

This invention relates to plastics pipes and more particularly to a novel composite plastics pipe, a method for its manufacture, and a method for making joints in such a pipe (see, for example, GB 2 297 138, corresponding to the preamble of claim 1 or 16).

In the handling, installation and connection of plastics pipes, the pipe surface is easily damaged. In "no-dig" plastics pipe installation techniques, for example, a tunnel is bored in the ground for the pipe and the pipe is then pushed or pulled through the tunnel into an excavated hole where the next pipe joint is to be made. Installation techniques such as pipe-bursting and slip lining can also place extreme stress on the pipe surface.

Other modern pipe laying methods can also subject the pipe to substantial bending and tensile forces, both of which can result in a deterioration of the mechanical strength of the pipe. In addition, the useful life of the pipe may be reduced by diffusible materials in the ground, or by environment conditions, for example, exposure to direct sunlight for long periods.

Of greatest concern, is that modern pipe laying methods can result in the pipe becoming scratched and dirty. This is disadvantageous firstly as the pipe material may be notch sensitive, in which case any scratches may cause greater damage to occur in the pipe during subsequent handling or use. Secondly, dirt and/or oxidation on the pipe surface may prevent succes sful welding. The main reason for failure of joints using an electrofusion fitting is that the surface of the pipe is dirty or has become oxidised. For this reason, until recently, the pipe ends always have had to be cleaned and scraped before jointing, for example, with a hand or mechanical scraper. In practice, the cleaning and scraping is often uneven (the underside of the pipe in particular may be treated less carefully), and the quality of the end result depends upon the professional skill of the installer.

In recent years there have been proposals to provide the pipe with a non-adherent skin layer which can be removed in order to permit jointing. Pipe constructions of this type are described, for example, in JP3-24392, EP0474583, EP0604907, GB2323556, GB2300456, and WO93/00212.

All of these prior art pipe constructions suffer from the disadvantage that modern pipe laying techniques tend to cause wrinkling, rucking, or at least undesired relative movement of the non-adherent skin layer relative to the core when the pipe is pushed through the ground. These proposals have therefore not proved commercially acceptable.

More traditional proposals, wherein a protective skin layer is provided which is strongly adherent to the pipe, do not, of course, overcome the problem of dirt and oxidation on the outer surface, since such skin layers are very difficult to remove without elaborate equipment. The presence of a tightly adherent skin layer can also dramatically lower the impact strength of the plastics pipe.

The first appreciation that the above problems could be solved by using a protective skin layer which is only lightly adherent to the core pipe occurs in GB2297137 and in the above-mentioned GB2297138.

In GB2297138, for example, there is provided a plastics pipe which comprises an inner core and an outer protective layer bonded thereto, in which the dimensions of the pipe and the protective layer are such that the ratio of the external diameter of the pipe to the thickness of the protective layer is at least 7 0, preferably at least 100, and the cohesive strength of the outer protective layer, excluding any lines of weakness, at least at the ends of the pipe, is greater than the strength of the adhesive bond between the out er protective layer and the inner core. According to this specification, by a correct choice of the material of the skin layer and the extrusion conditions, it is possible to provide a level of adhesion which still permits clean removal of the skin layer by peeling, whilst preventing rucking or wrinkling of the skin layer during installation and without substantially adversely affecting the mechanical properties of the pipe.

GB2297137 and GB2297138 do not recommend the use of an adhesive between the skin layer and the core, relying instead on the Van der Waals and/or diffusive bonding between the polymer surfaces.

The composite pipe of UK patents GB2297137 and GB2297138 has been commercially extremely successful, but it has been found that under specific conditions of temperature and loading it is difficult to provide a skin layer which has both the required toughness and limited adhesion to the core pipe. Quality control of the base polymer material of the skin layer, and control of the extrusion conditions during manufacture, need to be rigorously maintained if undesirable quantities of scrap are to be avoided. This substantially increases both raw material and manufacturing costs.

A novel composite plastics pipe has now been developed which has the advantages of a plastics pipe with a removable outer protective layer, but which gives improved flexibility in choice of materials and manufacturing conditions without substantially adversely affecting the mechanical properties of the pipe.

In a first aspect, the invention provides a plastics pipe which comprises an inner core and an outer removable skin layer bonded thereto,
the outer removable skin layer comprising at least two layers of compatible polymeric materials, a first outer protective layer chosen for its physical and mechanical properties, and a second inner bonding layer which adheres to the inner core,
the adhesion of the bonding layer to the inner core being sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core, and wherein the strength of the adhesive bond between the first outer protective layer and the second inner bonding layer of the skin layer is at least twice the strength of the adhesive bond between the bonding layer and the inner core.

In a second aspect the invention provides a method for the production of a plastics pipe comprising an inner core and an outer removable skin layer bonded thereto, the outer removable skin layer comprising at least two layers of compatible polymeric materials, a first outer protective layer chosen for its physical and mechanical properties, and a second inner bonding layer which adheres to the inner core, which method comprises co-extruding molten polymeric materials forming the inner core and the outer removable skin layer from one or more extruder dies, bringing the molten polymeric materials together and allowing them to cool, such that, on cooling, the adhesion of the bonding layer to the inner core is sufficient to prevent substantial undesired relative movement between the skin layer and the core during installation of the pipe, but insufficient to prevent the outer skin layer from being cleanly removed by peeling, at least at the ends of the pipe, and insufficient to cause a substantial reduction in the impact strength of the inner core, and wherein the strength of the adhesive bond between the first outer protective layer and the second inner bonding layer of the skin layer is at least twice the strength of the adhesive bond between the bonding layer and the inner core.

In a further aspect, the invention provides a method of making a joint to a plastics pipe according to the first aspect of the invention, or of joining two such plastics pipes, which comprises peeling the skin layer from the region or regions of the pipe to be joined, to expose a clean surface suitable for electrofusion jointing, installing an electrofusion fitting over the clean surface or surfaces of the pipe or pipes and activating the electrofusion fitting to fuse the region or regions of the pipe or pipes thereto.

By "compatible polymeric materials" in the specification is meant polymeric materials that are capable of fusing or adhering tightly together under heat and pressure, for example, when co-extruded. Such polymeric materials are generally of similar chemical composition, though this is not necessarily essential.

By "undesired relative movement" in this specification is meant movement or de-bonding of the skin layer relative to the core during directional drilling, pipe bursting, slip lining or other conventional pipe installation procedures.

By separating the functions of providing physical and mechanical strength on the one hand, and bonding on the other, we have found that it is possible to improve greatly the consistency of the resultant pipe without sacrificing quality and performance. Thus the properties of the materials of the skin layer no longer have to be a compromise between conflicting requirements.

Preferably the adhesion of the first outer protective layer to the second inner bonding layer of the skin layer is at least twice, and preferably, at least 5 times, more preferably 10 times, the strength of the adhesion between the bonding layer and the inner core.

The strength of the adhesive bond between the bonding layer and the inner core is preferably at least 0.1 N/mm, more preferably at least 0.2 N/mm, when measured by a rolling drum peel test as described in Appendix 1. The adhesive bond between the bonding layer of the skin and the inner core is preferably less than 2.0 N/mm, more preferably less than 1.5 N/mm. Very good results have been achieved using an adhesion between the bonding layer of the skin and the inner core within the range of from 0.3 to 1.5 N/mm, when measured by the above-mentioned rolling drum peel test.

It is likely that any adhesion between the skin bonding layer and the inner core will have some effect upon the impact strength of the plastics pipe, and it is presumably for this reason that prior art proposals (other than GB2297137 and GB2297138) have always sought to avoid adhesion between the skin layer and the core. Nevertheless, it has been found that the combination of the tough outer protective layer and the light bonding used in the present invention can still produce a plastics pipe having sufficient impact strength to meet the requirements of all available standards and moreover improved impact strength over the products of GB2297137 and GB2297138. Preferably the strength of the adhesive bond between the skin layer and the inner core is such that the impact strength of the composite pipe is at least 50%, preferably at least 75%, more preferably at least 90% of the impact strength of the inner core without the skin layer.

Each of the layers of the composite plastics pipe of the pres ent invention can comprise any suitable thermoplastic polymeric material, consistent with the maintenance of the required properties. Suitable polymeric materials include, for example, olefinically-unsaturated polymers and co-polymers, for example, polyolefins such as polyethylene, polypropylene, polybutene and polybutylene; ethylene and propylene co-polymers, for example, ethylene-vinyl acetate polymers, and propylene-vinyl acetate polymers; halogenated-vinyl polymers such as vinyl chloride polymers and co-polymers; polyamides, for example, nylon 6, nylon 11 and nylon 66; polycarbonates; ABS polymers and ionomer polymers such as Surlyn (RTM).

The inner core of the pipe comprises a polymeric material chosen to be compatible with the particular application, and in particular with the fluid material to be conveyed by the pipe. For many applications polyethylene is the preferred material for the inner core. The grade of polyethylene chosen, that is to say, high density, medium density, low density, or linear Low density, will depend upon the particular application. Suitable grades of polyethylene for pressure pipe applications preferably meet the requirements of at least one of prEN 12201-1 (except clause 4.2.1 and the associated pigment or carbon black requirements if the PE material is unpigmented), prEN12201-2 (except clause 5.2 and the associated pigment or carbon black requirements if the PE material is unpigmented), prEN1555-1 (except clause 4.2.2 and the associated pigment or carbon black requirements if the PE material is unpigmented) and prEN1555-2 (except clause 5.2 and the associated pigment or carbon black requirements if the PE material is unpigmented) .

Any suitable equivalent grade of polyethylene may, of course, also be used.

The removable skin layer comprises at least two layers of compatible polymeric materials, which can be any of those previously enumerated provided that they meet the definition of "compatible" previously set out in the specification. The first outer protective layer is preferably formed from a polymeric material or a blend of polymeric materials having good mechanical and physi cal properties, especially toughness and low temperat ure impact strength, together with an ability to rece ive quantities of stabilising materials, in particular UV stabilisers, sufficient to protect the underlying layer (s) and the inner core. Pre ferably the outer protective layer has a notched Charpy impact strength of at least 1 kJ/m², more preferably at least 2 kJ/m² and most preferably at least 4 kJ/m², when measured using the method of ISO 179/16A at a temperature of -20°C.

Preferred po lymeric materials for the outer protective layer comprise propylene homo- and co-polymers, propylene block co-polymers, and propylene random co-polymers.

An advantage of the plastics pipes of the present invention is that the normal UV stabiliser and colorant package need not be included in the plastics material of the inner core, provided that sufficient quantities of these materials are included in the outer protective layer. This enables the inner core to comprise a natural polymeric material, free or substantially free from additives which add to the cost of the core material and which, in certain circumstances, may impair the mechanical or physical properties of the core material. Alternatively, stabilisers can be included in th e core material, but the outer protective skin layer can be coloured to indicate the fluid being transported within the pipe.

Suitable stabiliser or ultra-violet blocking additives include, for example, titanium dioxide, carbon black, and other fillers. Whilst carbon black is an excellent UV stabiliser and reinforcing filler, buried pipes are frequently colour coded and its use in the outer protective layer is therefore not possible f or many applications. Titanium dioxide is, therefore, the preferred filler and UV stabiliser since this is also compatible with many colorant packages. Other filler materials such as chalk and talc, may also be used. The preferred filler particle size is dependent on the filler being used, but for titanium dioxide, for example, the average particle size range is preferable from 0.003 to 0.025 microns.

The second, inner bonding layer is required to be compatible with the first, outer protective layer and to have a consistent light adhes ion to the underlying core pipe such that the total skin layer can be peeled to leave a clean surface. Preferably, although not essentially, the inner bonding layer has a similar chemical composition and molecular weight to that of the outer protective layer and, for example, it can be a different grade of the same polymer. Thus where the outer protective layer comprises a propylene homo- or co-polymer, the inner bonding layer can also be a propylene homo- or co-polymer, or a propylene random co-polymer such that the adhesion to the inner core is below 2.0N/mm and preferably below 1.0N/mm.

Without wishing to be bound to any particular theory, it is believed that the adhesion between the high molecular weight polymers of the inner bonding layer and the core is as a result of Van der Waals and/or diffusive bonding, or similar forces. The adhesive properties of the inner bonding layer could be modified, for example, by the addition of an adhesion modifying agent such as a glycerol est er, as described in co-pending UK patent application no. (Agent's reference P071963GB).

A particularly preferred plastics pipe according to the present invention comprises an inner core of polyethylene and a skin comprising an outer layer of a propylene block co-polymer and an inner layer of a propylene random co-polymer.

Preferably the impact strength of a 90 mm outside diameter plastics pipe having a polyethylene inner core and a polypropylene skin layer with an SDR of 17.0 is greater than 300 joules when measured using the method of EN1411:1996 at a temperature of -10°C using a 90mm diameter tup for impacting the pipe.

The skin layer can, of course, comprise more than two layers of polymeric material, although in practice this is not usually necessary.

The relative thickness of the outer layer and the dimensions of the pipe have also been found to affect the impact resistance of the pipe. This is discussed in GB 2297138. Preferably the total skin layer has a thickness of greater than 0.1 mm, more preferably greater than 0.2 mm, and most preferably within the range of from about 0.3 mm to 2.0 mm.

Within the skin layer, the first, outer protective layer preferably has a thickness of from 0.2 mm to 1.8 mm, more preferably from 0.3 mm to 1.2 mm, most preferably from 0.4 mm to 1.0 mm. The second bonding layer preferably has a thickness of from 0.01 mm to 0.25 mm, more preferably from 0.025 mm to 0.2 mm, most preferably from 0.05 mm to 0.15 mm.

The dimensions of the pipe and the protective layer are preferably such that the ratio of the external diameter of the pipe to the thickness of the skin layer is at least 70, more preferably at least 100, most preferably in the range 150 to 800. From this it can be seen that it is possible to use a thicker protective layer on a pipe of greater diameter.

When stripping the skin layer from the pipe, it is important that no residue or holidays should be left on the pipe surface that could interfere with the electrofusion jointing process. Thus conventional adhesives and skin layers that are prone to tearing or fragmentation should be avoided. In general the force required to rupture the skin layer should be greater than the force required to peel the skin layer from the inner core.

By "a clean surface" in this specification is meant a pipe surface that can be subjected to electrofusion jointing without further preparation or treatment. Such surfaces should be clean such that the electrofusion joint formed to them meets the requirements of one or more of pr EN12201 part 3, pr EN1555 part 3 and WIS 04-32-14.

The composite plastics pipe of the present invention is preferably produced by co-extrusion, wherein the polymeric materials are brought together in the pressure area of the die and exit as a single extrudate. For example, the die may be connected to one, two, three or more extruders and fed with separate streams of molten material. Alternatively, the die may be provided with concentric die outlets fed with separate streams of molten polymeric materials which are to form the inner core and the skin layer. In this case, the extrudates, on leaving the extruder die outlets, can be brought into contact with each other whilst still molten, preferably in a sizing die which simultaneously adj usts the outer diameter of the pipe.

In a further alternative, the inner core extrudate may be passed through a sizing die before applying the skin layer. In this case it may be necessary to re-heat or flame-brush the surface of the inner core extrudate to create a surface ready to receive the skin layer. Because of the difficulty of maintaining a consistent adhesion between the inner core and the skin layer, and of keeping the core surface clean (prior to coating with the skin), this method is not presently preferred.

The invention is illustrated by the following Example:

### EXAMPLE

A polyethylene core pipe of nominal outer diameter 90mm is co-extruded with a propylene random copolymer skin layer. The experiment is repeated replacing the propylene random copolymer with a dual layer skin comprising (I) a propylene block copolymer outer protective layer and (II) a propylene random copolymer inner bonding layer.

Skin adhesion is measured using a rolling drum peel test as described in Appendix 1.

The skin layers of the resuLtant pipes can be peeled readily using a simple hand tool, exposing a clean surface of the core pipe. Electrofusion jointing tests give very good results in conformance with prEN12201 part 3, prEN1555 part 3 and WIS 04-32-14. In a comparison test, the same polyethylene core pipe is extruded with a propylene block copolymer skin layer alone. The skin layer firmly adheres to the core pipe and cannot be removed from the pipe by peeling.

The impact strength of the pipes is measured at -10°C, with and without the skin layer, using the method of EN 1411:1996. In further experiments the pipes are notched at 90° to the point of impact prior to testing to simulate service conditions. Whilst the presence of the skin layer tends to lower the impact strength of the pipe, all values are within the requirements of available standards.

### APPENDIX 1

### DETERMINATION OF THE ADHESION STRENGTH OF PIPE SKIN - CORE PEEL

### Apparatus

A tensile testing machine accurate to grade A of BS5214 : Part 1: 1975 or grade 1 of BS1610 : Part 1 : 1985, for example, a Lloyds tensile test machine, using a 100N load cell.

### Test Specimens

Two test pieces are cut one from each end of the sample pipe, 25mm +/- 2mm wide, the two sample rings of pipe are trimmed around the circumference to remove the jagged edge. The pipe is marked along top dead centre (TDC) of the extrusion line (if known).

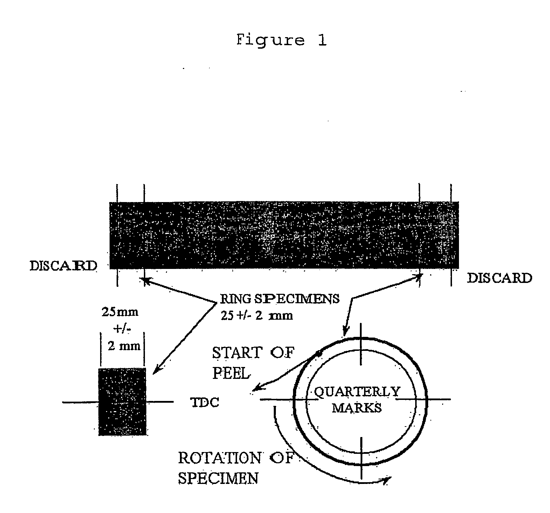

The two ring specimens are marked with an indelible marker at quarterly points around the circumference beginning at TDC (if known, as shown in figure 1.

### Procedure

Cut through the skin along mark at TDC & prise edge of skin from pipe, peel skin off to 30 - 40mm length, feed peeled skin through the jig as shown & clamp in upper jaws.

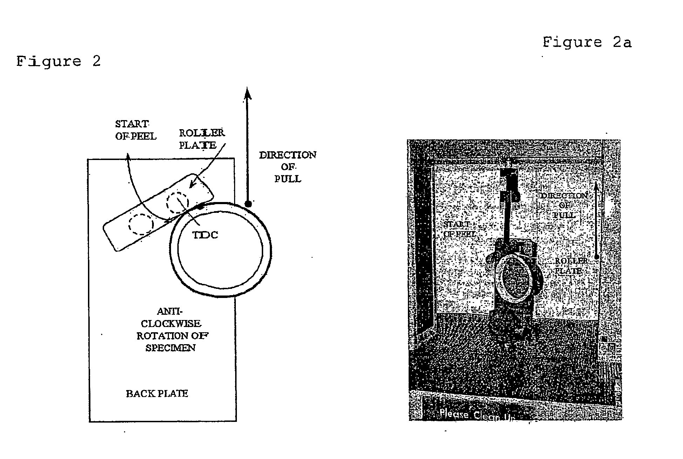

Mount the test piece in the jig as shown in Figures 2 and 2a.

The skin is then peeled from the pipe at a separation rate of 100mm/min and a trace recorded of load versus time.

The average value of the load required to peel the skin sample is calculated (Newtons), and divided by the true width of the peel sample to obtain the test result (Newtons/millimetre) .

The average of the 10 peak load values recorded is calculated (Newtons), and divided by the true width of the peel sample to obtain the test result (Newtons/millimetre).

The reader's attention is directed to all papers and documents which are filed concurrently with or previous to this specification in connection with this application and wh ich are open to public inspection with this specification.

## Claims

1. A plastics pipe which comprises an inner core and an outer removable skin layer bonded thereto,
the outer removable skin layer comprising at least two layers of compatible polymeric materials, a first outer protective layer chosen for its physical and mechanical properties, and a second inner bonding layer which adheres to the inner core, the adhesion of the bonding layer to the inner core being sufficient to prevent substantial undesired relative movement between the skin layer and the core during installation, but insufficient to prevent the outer skin layer from being cleanly removed by peeling, at least at the ends of the pipe, and insufficient to cause a substantial reduction in the impact strength of the inner core, **characterised in that** the strength of the adhesive bond between the first outer protective layer and the second inner bonding layer of the skin layer is at least twice the strength of the adhesive bond between the bonding layer and the inner core.

2. A plastics pipe according to claim 1, wherein the strength of the adhesive bond between the first outer protective layer and the second inner bonding layer of the skin layer is at least five times the strength of the adhesive bond between the bonding layer and the inner core.

3. A plastics pipe according to claim 1 or 2, wherein the adhesion between the second inner bonding layer and the inner core is from 0.3 to 1.5 N/mm when measured by a rolling drum peel test as described in Appendix 1.

4. A plastics pipe according to any one of the preceding claims, in which the strength of the adhesive bond between the skin layer and the inner core is such that the impact strength of the composite pipe is at least 75% of the impact strength of the inner core without the skin layer.

5. A plastics pipe according to any one of the preceding claims, wherein the inner core comprises polyethylene.

6. A plastics pipe according to any one of the preceding claims, wherein the outer protective layer comprises a propylene homo-or co-polymer, or a propylene block co-polymer.

7. A plastics pipe according to any one of the preceding claims, wherein the second inner bonding layer comprises a propylene homo - or co-polymer, or a propylene random co-polymer.

8. A plastics pipe according to claim 7, wherein the inner bonding layer comprises a propylene random co-polymer.

9. A plastics pipe according to any one of the preceding claims, which comprises an inner core of polyethylene and a skin comprising an outer layer of a propylene block co-polymer and an inner layer of a propylene random co-polymer.

10. A plastics pipe according to any one of the preceding claims, in which the inner core comprises polyethylene and the skin layer comprises a propylene co-polymer and wherein the impact strength of the pipe is greater than 300 joules, when measured using the method of EN1411:1996 at a temperature of -10°C using a 90mm tup for impacting the pipe.

11. A plastics pipe according to any one of the preceding claims, wherein the skin layer has a thickness within the range of from 0.3 mm to 2.0 mm.

12. A plastics pipe according to any one of the preceding claims wherein the first outer protective layer has a thickness of from 0.3 mm to 1.8 mm.

13. A plastics pipe according to any one of the preceding claims, wherein the second inner bonding layer has a thickness of from 0.025 mm to 0.2 mm.

14. A plastics pipe according to any one of the preceding claims, wherein the ratio of the external diameter of the pipe to the thickness of the skin layer is from 150 to 800.

15. A method for the production of a plastics pipe comprising an inner core and an outer removable skin layer bonded thereto, the outer removable skin layer comprising at least two layers of compatible polymeric materials, a first outer protective layer chosen for its physical and mechanical properties, and a second inner bonding layer which adheres to the inner core, which method comprises co-extruding molten polymeric materials forming the inner core and the outer removable skin layer from one or more extruder dies, bringing the molten polymeric materials together and allowing them to cool, such that, on cooling, the adhesion of the bonding layer to the inner core is sufficient to prevent substantial undesired relative movement between the skin layer and the core during installation of the pipe, but insufficient to prevent the outer skin layer from being cleanly removed by peeling, at least at the ends of the pipe, and insufficient to cause a substantial reduction in the impact strength of the inner core, **characterised in that** the strength of the adhesive bond between the first outer protective layer and the second inner bonding layer of the skin layer is at least twice the strength of the adhesive bond between the bonding layer and the inner core.

16. A method according to claim 15, wherein the polymeric materials of the inner core and the outer removable skin layer are extruded simultaneously and brought together whilst still hot.

17. A method of making a joint to a plastics pipe according to any one of claims 1 to 14, or of joining two such plastics pipes, which comprises peeling the skin layer from the region or regions of the pipe to be joined, to expose a clean surface suitable for electrofusion jointing, installing an electrofusion fitting over the clean surface or surfaces of the pipe or pipes and activating the electrofusion fitting to fuse the region or regions of the pipe or pipes thereto.

## Patentansprüche

1. Kunststoffrohr mit einem Innenteil und einer damit verbondeten entfernbaren Außenhautschicht, wobei die entfernbare Außenhautschicht mindestens zwei Schichten aus kompatiblen Polymermaterialien umfasst, nämlich eine erste äußere Schutzschicht, die aufgrund ihrer physikalischen und mechanischen Eigenschaften gewählt ist, und eine zweite innere Verbondungsschicht, die an dem Innenteil haftet, wobei die Haftung der Verbondungsschicht an dem inneren Kern ausreicht, um im wesentlichen unerwünschte Relativbewegungen zwischen der Hautschicht und dem Innenteil während der Installation zu verhindern, jedoch nicht ausreicht, um, zumindest an den Enden des Rohres, ein sauberes Entfernen der Außenhautschicht durch Abziehen zu verhindern, und nicht ausreicht, um eine wesentliche Verringerung der Stoßfestigkeit des Innenteils zu bewirken, **dadurch gekennzeichnet, dass** die Festigkeit der Haftverbindung zwischen der ersten äußeren Schutzschicht und der zweiten inneren Verbondungsschicht der Hautschicht zumindest das Doppelte der Festigkeit der Haftverbindung zwischen der Verbondungsschicht und dem Innenteil beträgt.

2. Kunststoffrohr nach Anspruch 1, bei dem die Festigkeit der Haftverbindung zwischen der ersten äußeren Schutzschicht und der zweiten inneren Verbondungsschicht der Hautschicht mindestens das Fünffache der Festigkeit der Haftverbindung zwischen der Verbondungsschicht und dem Innenteil beträgt.

3. Kunststoffrohr nach Anspruch 1 oder 2, bei dem die Haftung zwischen der inneren Verbondungsschicht und dem Innenteil, gemessen durch einen im Anhang 1 beschriebenen Drehtrommel-Schälversuch, zwischen 0,3 und 1,5 N/mm beträgt.

4. Kunststoffrohr nach einem der vorhergehenden Ansprüche, wobei die Festigkeit der Haftverbindung zwischen der Hautschicht und dem inneren Kern derart ist, dass die Stoßfestigkeit des Verbundrohres mindestens 75% der Stoßfestigkeit des Innenteils ohne die Hautschicht beträgt.

5. Kunststoffrohr nach einem der vorhergehenden Ansprüche, bei dem das Innenteil Polyethylen aufweist.

6. Kunststoffrohr nach einem der vorhergehenden Ansprüche, bei dem die äußere Schutzschicht ein Propylen-Homo- oder -Copolymer oder ein Propylen-Block-Copolymer aufweist.

7. Kunststoffrohr nach einem der vorhergehenden Ansprüche, bei dem die zweite innere Verbondungsschicht ein Propylen-Homo- oder -Copolymer oder ein Propylen-Block-Copolymer aufweist.

8. Kunststoffrohr nach Anspruch 7, bei dem die innere Verbondungsschicht ein Propylen-Random-Copolymer aufweist.

9. Kunststoffrohr nach einem der vorhergehenden Ansprüche, mit einem Innenteil aus Polyethylen und einer Haut, welche eine äußere Schicht aus einem Propylen-Block-Copolymer und eine innere Schicht aus einem Propylen-Random-Copolymer aufweist.

10. Kunststoffrohr nach einem der vorhergehenden Ansprüche, bei dem das Innenteil Polyethylen aufweist und die Hautschicht ein Propylen-Copolymer aufweist, und bei dem die Stoßfestigkeit des Rohres höher als 300 Joules ist, gemessen nach dem Verfahren gemäß EN1411:1996 bei einer Temperatur von -10°C unter Verwendung eines 90mm-Stoßkörpers zum Aufbringen eines Stoßes auf das Rohr.

11. Kunststoffrohr nach einem der vorhergehenden Ansprüche, bei dem die Hautschicht eine Dicke in dem Bereich von 0,3 mm bis 2,0 mm aufweist.

12. Kunststoffrohr nach einem der vorhergehenden Ansprüche, bei dem die erste äußere Schutzschicht eine Dicke zwischen 0,3 mm und 1,8 mm aufweist.

13. Kunststoffrohr nach einem der vorhergehenden Ansprüche, bei dem die zweite innere Verbondungsschicht eine Dicke zwischen 0,025 mm und 0,2 mm aufweist.

14. Kunststoffrohr nach einem der vorhergehenden Ansprüche, bei dem das Verhältnis zwischen dem Außendurchmesser des Rohres und der Dicke der Hautschicht zwischen 150 und 800 beträgt.

15. Verfahren zur Herstellung eines Kunststoffrohres mit einem Innenteil und einer damit verbondeten entfernbaren Außenhautschicht, wobei die entfernbare Außenhautschicht mindestens zwei Schichten aus kompatiblen Polymermaterialien aufweist, nämlich eine erste äußere Schutzschicht, die aufgrund ihrer physikalischen und mechanischen Eigenschaften gewählt ist, und eine zweite innere Verbondungsschicht, die an dem Innenteil haftet, wobei das Verfahren umfasst: das Coextrudieren geschmolzener Polymermaterialien, welche das Innenteil und die entfernbare Außenhautschicht bilden, aus einer oder mehr Extruderdüsen, Zusammenbringen der geschmolzenen Kunststoffmaterialien und Abkühlenlassen derselben, so dass beim Abkühlen die Haftung der Verbondungsschicht an dem Innenteil ausreicht, wesentliche unerwünschte Relativbewegungen zwischen der Hautschicht und dem Innenteil während des Installierens des Rohres zu verhindern, jedoch nicht ausreicht, um zumindest an den Enden des Rohres ein sauberes Entfernen der Außenhautschicht durch Abziehen zu verhindern, und nicht ausreicht, um eine wesentliche Verringerung der Stoßfestigkeit des Innenteils zu bewirken, **dadurch gekennzeichnet, dass** die Festigkeit der Haftverbindung zwischen der ersten äußeren Schutzschicht und der zweiten inneren Verbondungsschicht der Hautschicht zumindest das Doppelte der Festigkeit der Haftverbindung zwischen der Verbondungsschicht und dem Innenteil beträgt.

16. Verfahren nach Anspruch 15, bei dem die Polymermaterialien des Innenteils und der entfernbaren Außenhautschicht gleichzeitig extrudiert werden und noch im warmen Zustand zusammengebracht werden.

17. Verfahren zur Herstellung einer Verbindung mit einem Kunststoffrohr nach einem der Ansprüche 1 bis 14, oder zum Verbinden zweier derartiger Kunststoffrohre, umfassend das Abziehen der Hautschicht von dem zu verbindenden Bereich oder den zu verbindenden Bereichen des Rohres, um eine saubere Fläche freizulegen, die für ein Verbinden durch E-lektroschmelzen geeignet ist, Anbringen eines Elektroschmelzfittings über der sauberen Fläche oder den sauberen Flächen des Rohres oder der Rohre, und Aktivieren des Elektroschmelzfittings zum Schmelzen des Bereichs oder der Bereiche des Rohres oder der Rohre mit diesem.

## Revendications

1. Tuyau en plastique qui comprend une âme interne et une couche pelliculaire amovible externe liée à celle-ci,
la couche pelliculaire amovible externe comprenant au moins deux couches de matériaux polymères compatibles, une première couche protectrice externe choisie pour ses propriétés physiques et mécaniques, et une deuxième couche de liage interne qui adhère à l'âme interne, l'adhérence de la couche de liage à l'âme interne étant suffisante pour empêcher tout mouvement relatif indésirable substantiel entre la couche pelliculaire et l'âme lors de l'installation, mais insuffisante pour empêcher que la couche pelliculaire externe soit retirée proprement par pelage, au moins au niveau des extrémités du tuyau, et insuffisante pour provoquer une réduction substantielle de la résistance aux chocs de l'âme interne, **caractérisé en ce que** la résistance de la liaison adhésive entre la première couche protectrice externe et la deuxième couche de liage interne de la couche pelliculaire est au moins le double de la résistance de la liaison adhésive entre la couche de liage et l'âme interne.

2. Tuyau en plastique selon la revendication 1, dans lequel la résistance de la liaison adhésive entre la première couche protectrice externe et la deuxième couche de liage interne de la couche pelliculaire est au moins cinq fois égale à la résistance de la liaison adhésive entre la couche de liage et l'âme interne.

3. Tuyau en plastique selon la revendication 1 ou 2, dans lequel l'adhérence entre la deuxième couche de liage interne et l'âme interne est de 0,3 à 1,5 N/mm, lorsqu'on la mesure grâce à un essai de pelage à tambour rotatif comme décrit dans l'annexe 1.

4. Tuyau en plastique selon l'une quelconque des revendications précédentes, dans lequel la résistance de la liaison adhésive entre la couche pelliculaire et l'âme interne est telle que la résistance aux chocs du tuyau composite est au moins égale à 75 % de la résistance aux chocs de l'âme interne sans la couche pelliculaire.

5. Tuyau en plastique selon l'une quelconque des revendications précédentes, dans lequel l'âme interne comprend du polyéthylène.

6. Tuyau en plastique selon l'une quelconque des revendications précédentes, dans lequel la couche protectrice externe comprend un homo- ou copolymère de propylène, ou un copolymère séquencé de propylène.

7. Tuyau en plastique selon l'une quelconque des revendications précédentes, dans lequel la deuxième couche de liage interne comprend un homo- ou copolymère de propylène, ou un copolymère aléatoire de propylène.

8. Tuyau en plastique selon la revendication 7, dans lequel la couche de liage interne comprend un copolymère aléatoire de propylène.

9. Tuyau en plastique selon l'une quelconque des revendications précédentes, qui comprend une âme interne de polyéthylène et une couche pelliculaire comprenant une couche externe d'un copolymère séquencé de propylène et une couche interne d'un copolymère aléatoire de propylène.

10. Tuyau en plastique selon l'une quelconque des revendications précédentes, dans lequel l'âme interne comprend du polyéthylène, et la couche pelliculaire comprend un copolymère de propylène, et dans lequel la résistance aux chocs du tuyau est supérieure à 300 joules, lorsqu'on la mesure en utilisant la méthode de EN1411:1996, à une température de -10°C, en utilisant un mouton de 90 mm pour créer un impact sur le tuyau.

11. Tuyau en plastique selon l'une quelconque des revendications précédentes, dans lequel la couche pelliculaire a une épaisseur à l'intérieur de la plage de 0,3 mm à 2,0 mm.

12. Tuyau en plastique selon l'une quelconque des revendications précédentes, dans lequel la première couche protectrice externe a une épaisseur de 0,3 mm à 1,8 mm.

13. Tuyau en plastique selon l'une quelconque des revendications précédentes, dans lequel la deuxième couche de liage interne a une épaisseur de 0,025 mm à 0,2 mm.

14. Tuyau en plastique selon l'une quelconque des revendications précédentes, dans lequel le rapport entre le diamètre externe du tuyau et l'épaisseur de la couche pelliculaire est de 150 à 800.

15. Procédé de production d'un tuyau en plastique comprenant une âme interne et une couche pelliculaire amovible externe liée à celle-ci, la couche pelliculaire amovible externe comprenant au moins deux couches de matériaux polymères compatibles, une première couche protectrice externe choisie pour ses propriétés physiques et mécaniques, et une deuxième couche de liage interne qui adhère à l'âme interne, lequel procédé comprend une co-extrusion des matériaux polymères fondus formant l'âme interne et la couche pelliculaire amovible externe à partir d'au moins une filière d'extrusion, en regroupant les matériaux polymères fondus et en leur permettant de refroidir, de telle sorte que, lors du refroidissement, l'adhérence de la couche de liage à l'âme interne est suffisante pour empêcher tout mouvement relatif indésirable substantiel entre la couche pelliculaire et l'âme lors d'une installation du tuyau, mais insuffisante pour empêcher que la couche pelliculaire externe ne soit retirée proprement par pelage, au moins au niveau des extrémités du tuyau, et insuffisante pour provoquer une réduction substantielle de la résistance aux chocs de l'âme interne, **caractérisé en ce que** la résistance de la liaison adhésive entre la première couche protectrice externe et la deuxième couche de liage interne de la couche pelliculaire est au moins le double de la résistance de la liaison adhésive entre la couche de liage et l'âme interne.

16. Procédé selon la revendication 15, dans lequel les matériaux polymères de l'âme interne et de la couche pelliculaire amovible externe sont extrudés simultanément et regroupés tant qu'ils sont encore chauds.

17. Procédé de fabrication d'un joint pour un tuyau en plastique selon l'une quelconque des revendications 1 à 14, ou permettant de joindre deux tels tuyaux en plastique, qui comprend un pelage de la couche pelliculaire de la région ou des régions du tuyau devant être jointes, pour exposer une surface propre appropriée pour la jonction par électrofusion, une installation d'un raccord par électrofusion sur la surface ou les surfaces propres du ou des tuyaux, et une activation du raccord par électrofusion pour faire fondre la ou les régions du ou des tuyaux.
